(19) Europäisches Patentamt
European Patent Office
Office européen des brevets

(11) Publication number: **0 010 066 A2**

(12) **EUROPEAN PATENT APPLICATION**

(21) Application number: 79810110.1

(22) Date of filing: 01.10.79

(51) Int. Cl.$^3$: A 01 N 57/18
C 07 F 9/48

(30) Priority: 05.10.78 GB 3940078

(43) Date of publication of application: 16.04.80 Bulletin 80/8

(84) Designated Contracting States: BE CH DE FR GB IT NL

(71) Applicant: CIBA-GEIGY AG
Patentabteilung Postfach
CH-4002 Basel(CH)

(72) Inventor: Pickles, Wilfred, Dr.
16 Aldwyn Crescent Hazel Grove
Stockport, Cheshire(GB)

(72) Inventor: Baylis, Eric Keith, Dr.
18, Abbey Grove Offerton
Stockport, Cheshire(GB)

(54) **Agent and method for influencing plant growth containing phosphonous acid peptides.**

(57) An agent for inhibiting plant growth, in particular a herbicide and plant growth inhibiting agent comprises, in addition to carriers and/or other additives, at least one compound of formula:-

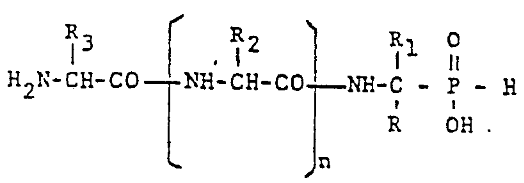

(I)

or the corresponding zwitterion form in which R and $R_1$ may be the same or different and each can be hydrogen, deuterium or an optionally substituted lower alkyl group, lower alkenyl, lower alkynyl, cycloalkyl, aryl or heterocyclic radical containing one or more oxygen, nitrogen or sulphur atoms and which may be fused to an aromatic ring, a lower alkyl group substituted by a cycloalkyl radical, a lower alkyl group substituted by an aryl radical, a lower alkyl group substituted by a heterocyclic radical as defined above, or R and $R_1$ together form a polymethylene chain optionally interrupted by an oxygen, nitrogen or sulphur atoms, or $R_1$ represents, together with the C(R) -N< residue to which it is attached, the atoms required to complete a heterocyclic radical; and $R_2$ and $R_3$ may be the same or different and each can be hydrogen, optionally substituted lower alkyl, cycloalkyl, aryl or lower alkyl substituted by a cycloalkyl radical, lower alkyl substituted by a heterocyclic radical containing one or more nitrogen atoms; a heterocyclic radical containing one or more nitrogen atoms; or $R_2$ and $R_3$, independently, together with the C(H)-N residue to which each is attached, may each represent the atoms required to complete a heterocyclic radical; and n is 0, 1, 2 or 3; as well as the esters and salts thereof and all optical isomers thereof.

EP 0 010 066 A2

5-12064/=

# Agent and method for influencing plant growth containing phosphonous acid peptides

The present invention relates to a novel agent for influencing plant growth, in particular to a herbicidal and plant growth regulating agent, and to a process for inhibiting and suppressing plant growth in monocotyledonous and dicotyledonous plants, especially grasses, cereal crops, soya, tobacco and ornamental plants.

According to the present invention, there is provided an agent for influencing plant growth, in particular a herbicide and plant growth inhibiting agent comprising, in addition..

to carriers and/or other additives, at least one compound of formula

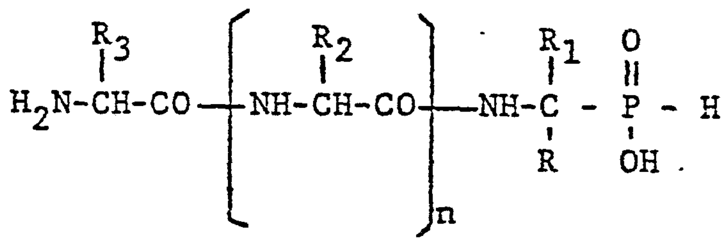

(I)

or the corresponding zwitterion form in which R and $R_1$ may be the same or different and each can be hydrogen, deuterium or an optionally substituted lower alkyl group, lower alkenyl, lower alkynyl, cycloalkyl, aryl or heterocyclic radical containing one or more oxygen, nitrogen or sulphur atoms and which may be fused to an aromatic ring, a lower alkyl group substituted by a cycloalkyl radical, a lower alkyl group substituted by an aryl radical, a lower alkyl group substituted by a heterocyclic radical as defined above, or R and $R_1$ together form a polymethylene chain optionally interrupted by an oxygen, nitrogen or sulphur atoms, or $R_1$ represents, together with the C(R) - N< residue to which it is attached, the atoms required to complete a heterocyclic radical; and $R_2$ and $R_3$ may be the same or different and each can be hydrogen, optionally substituted lower alkyl, cycloalkyl, aryl or lower alkyl substituted by a cycloalkyl radical, lower alkyl substituted by a heterocyclic radical containing one or more nitrogen atoms; a heterocyclic radical containing one or more nitrogen atoms; or $R_2$ and $R_3$, independently, together with the C(H)-N residue to which each is attached, may each represent the atoms required to complete a heterocyclic radical; and n is 0, 1, 2, or 3; as well as the esters and salts thereof and all optical isomers thereof. The α-amino acid residues or esters occurring in the peptides defined above may have the D,L- L- or D- configuration.

The term "lower" referred to above and hereinafter in connection with organic radicals or compounds respectively, defines such with up to 6, preferably up to 3 carbon atoms.

The above listed radicals R, $R_1$, $R_2$ and $R_3$ optionally may be substituted by one or more functional groups, as for example, free or etherified hydroxy or mercapto groups, optionally converted carboxyl groups, S-substituted dithio groups, optionally substituted amino groups $-NR_4R_5-$ in which $R_4$ and $R_5$ may be the same or different and can be hydrogen or lower alkyl or optionally substituted guanidiono and/or

optionally substituted aryl groups or heterocyclic residues.

Moreover R and $R_1$ as lower alkyl group, aryl group or heterocyclic radical or an aryl group or heterocyclic radical as substituent of R or $R_1$ as lower alkyl group may be substituted by one or more halogen atoms, $-NR_4R_5$ groups in which $R_4$ and $R_5$ together form a polymethylene chain containing up to 6 carbon atoms which may optionally be interrupted by oxygen or nitrogen or an aryloxy group optionally substituted by hydroxy or an halogen atom as for example iodine.

The substituents R, $R_1$, $R_2$ and $R_3$ as lower alkyl group may be a straight or branched chain alkyl group of 1 to 6 carbon atoms and may be for example, methyl, ethyl, n-propyl, iso-propyl, n-butyl, isobutyl,secondary butyl, tertiary butyl, n-amyl, isoamyl or n-hexyl. Preferred are lower alkyl groups of 1 to 3 carbon atoms as for example methyl, ethyl, n-propyl or isopropyl.

When R, $R_1$, $R_2$ or $R_3$ is a cycloalkyl group this may be a cycloalkyl group with 3 to 7 carbon atoms as for example a cyclopropyl, cyclobutyl, cyclopentyl, cyclohexyl or cycloheptyl group.

A lower alkyl group substituted by a cycloalkyl radical may be for example cyclopropyl-methyl, cyclopropyl-ethyl, cyclopropyl-n-propyl, cyclobutyl-methyl, cyclobutyl-ethyl, cyclobutyl-n-propyl, cyclopentyl-methyl, cyclopentylethyl, cyclopentyl-n-propyl, cyclohexyl-methyl, cyclohexylethyl, cyclohexyl-n-propyl, cycloheptyl-methyl, cycloheptyl-ethyl or cycloheptyl-n-propyl.

The term aryl preferably comprises mononuclear groups such as phenyl, which may be substituted in one or more positions by substituents such as lower alkyl, hydroxy, lower alkoxy or halogen.

Moreover in addition to the meaning above when R and $R_1$ or the substituent of a lower alkyl group thereof is an aryl group, this aryl group comprises 6 to 10 carbon atoms and may be for example as mononuclear group a phenyl, tolyl, xylyl, ethylphenyl, propylphenyl, isopropylphenyl, butylphenyl, isobutylphenyl, sec.-butylphenyl, tert.-butylphenyl or naphthyl group.

If the substituents $R_1$, $R_2$ or $R_3$ can also represent together with the C(R)-N< residue, or CH-N< residue respectively, a heterocyclic radical, it is preferably a 5-membered nitrogen-containing ring such as pyrrolidine in proline and 4-hydroxy-pyrrolidine in hydroxy-proline, and pyroglutamic acid.

BAD ORIGINAL

A heterocyclic residue as substituent of an optional substituted radical R, $R_1$, $R_2$ and $R_3$ may be a mono- or bicyclic, a monoaza or diazacyclic radical of aromatic character such as imidazolyl, as for example 4-imidazolyl, or indolyl, as for example 3-indolyl radical.

Moreover in addition when R or $R_1$ or the substituent of a lower alkyl group thereof is a heterocyclic ring containing one or more oxygen, nitrogen or sulphur atoms this may be, for example, aziridine, oxetane, thiophene, furan, pyridine, azepine, isoxazole, thiazole, pyrimidine, diazepine, thiadiazol, triazol, triazine, or imidazole or indole as mentioned above.

When R or $R_1$ is a lower alkenyl group this may be a straight or branched chain alkenyl group with 2 to 6 carbon atoms, and may be, for example, an ethenyl, allyl, crotyl, methallyl, pentenyl or hexenyl group.

When R or $R_1$ represents a lower alkynyl group this may be straight or branched chain alkynyl group with 2 to 6 carbon atoms, and may be, for example, an ethynyl, propynyl, butynyl, pentynyl or hexynyl group.

When R and $R_1$ together form a polymethylene chain, comprising a residue of 2 to 7 carbon atoms, this may be for example $-(CH_2)_2-$, $-(CH_2)_3-$, $-(CH_2)_4-$, $-(CH_2)_5-$, $-(CH_2)_6-$, $-(CH_2)_7-$, $-(CH_2)_2CHCH_3(CH_2)_2-$ or $-(CH_2)_2NH(CH_2)_2-$.

BAD ORIGINAL

The term etherified hydroxy is preferably lower alkoxy, such as methoxy, ethoxy, n-propyloxy, isopropyloxy or n-butyloxy and etherified mercapto is preferably lower alkylthio as for example methylthio, ethylthio, propylthio or isopropylthio.

The compounds containing S-substituted dithio groups are symmetrical or unsymmetrical residues of a compound of formula I bound to the other residue of a compound of formula I by a S-S-bridge, i.e. -

$$A - S - S - B$$

wherein A and B are the same or different and each is a residue of a compound of formula I formed by the loss of a hydrogen atom from a carbon atom in one of the substituents R, $R_1$, $R_2$ or $R_3$.

Examples of such compounds are those having the formulae Ia and Ib

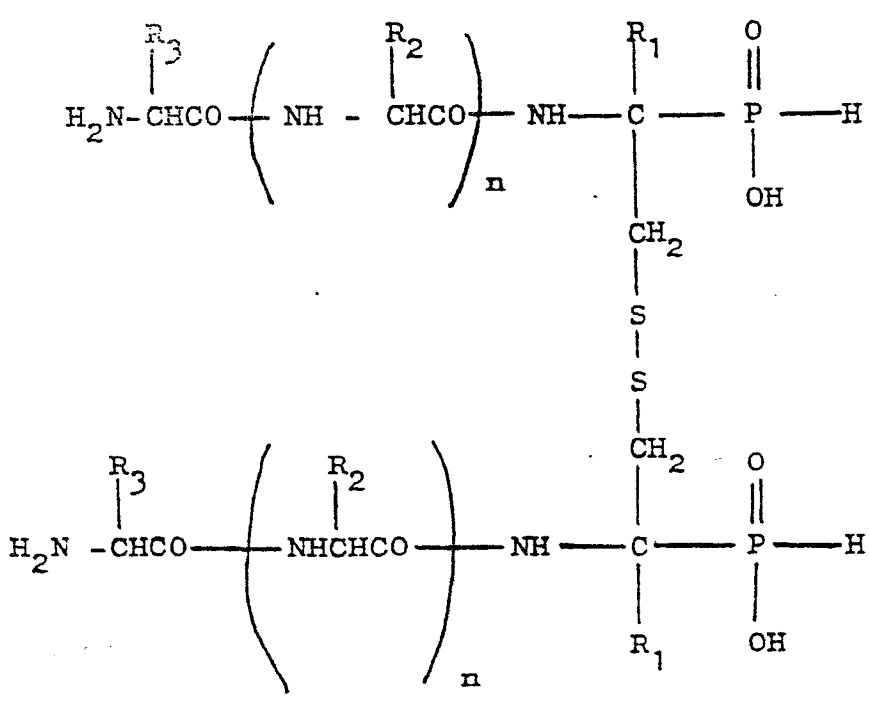

Ia

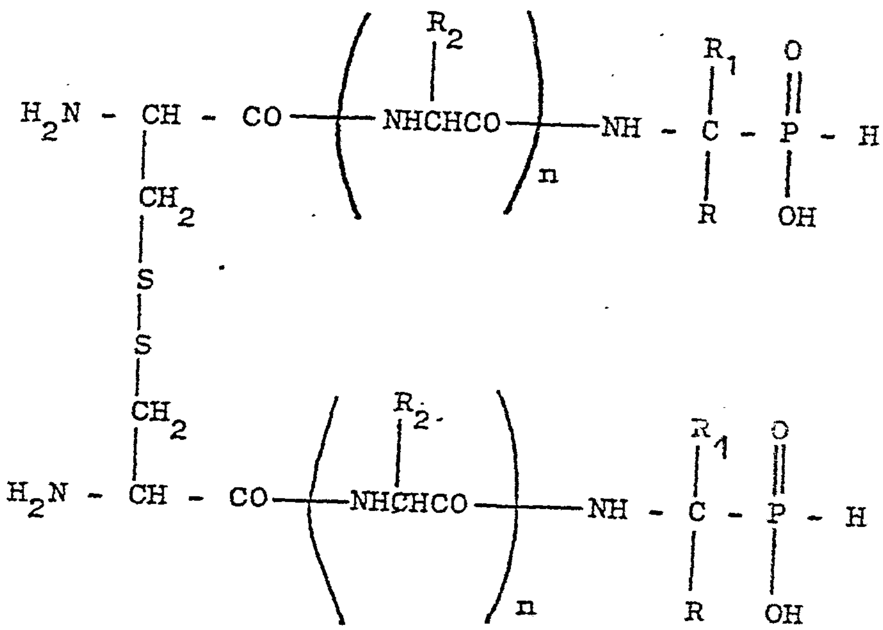

Ib

Functionally modified carboxy is, e.g. esterified carboxy, especially lower alkoxycarbonyl, also phenyl-lower-alkoxycarbonyl or carbamoyl.

When R, $R_1$, $R_2$ or $R_3$ is a group substituted by $-NR_4R_5$, in which one or both the $R_4$ and $R_5$ groups are lower alkyl, these groups may be lower alkyl groups as defined above. The $-NR_4R_5$ group including the different meanings enumerated above may be for example, methylamino, dimethylamino, methyl-ethylamino, ethylamino, diethylamino, propylamino, isopropylamino, dipropylamino or diisopropylamino.

The $-NR_4R_5$ groups in which $R_4$ and $R_5$ together form a polymethylene chain containing up to 6 carbon atoms which may optionally be interrupted by oxygen or nitrogen as for instance as substituent of R and $R_1$ and are preferably the morpholino or piperidino group.

BAD ORIGINAL

Furthermore when R or $R_1$ is a group substituted by aryloxy, the aryloxy group may be phenoxy, tolyloxy, xylyloxy, diiodo-hydroxy phenoxy.

The term halogen may be bromine or iodine but is preferably fluorine or chlorine.

Esters of the compounds of formula I are preferably the esters of the compounds of formula I with low alkyl alcohols e.g. methanol, ethanol, n-propanol and n-butanol, aralkyl alcohols e.g. benzyl alcohol and phenols e.g. phenol. Other alcohols which may be used to form the corresponding ester of the compound of formula I are alkanoyloxymethanols e.g. acetoxymethanol or pivaloyloxymethanol; amino-lower-alkanoyloxymethanols e.g. α-amino-lower-alkanoyloxymethanols such as glycyloxy-methanol, L-valyloxymethanol or L-leucyloxymethanol; and also 3-hydroxy-phthalide and 5-indanol.

Salts of the compounds of formula I are salts with either strong monobasic or polybasic or with inorganic or organic bases. Strong acids include all those strong acids e.g. hydrogen halide acids or aliphatic or aromatic carboxylic and sulphonic acids which are capable of forming salts with the amino group of the molecule and which are physiologically acceptable to plants. Inorganic and organic bases are those bases e.g. alkali metal and alkaline earth metal hydroxides or alkylamines which are capable of forming salts with the acidic hydroxyl group of the molecule and which are physiologically acceptable to plants.

Particularly useful are compounds of formula I wherein R and $R_1$ may be the same or different and each is hydrogen, deuterium, optionally substituted lower alkyl, or lower alkyl substituted by cycloalkyl, aryl or by a mono- or bicyclic monoaza-or diazacyclic radicals, optionally substituted by one to three hydroxy or lower alkoxy groups; or $R^1$ represents, together with the -CR-N< residue to which it is attached, the atoms required to complete a 2-pyrrolidinyl group; $R_2$ and $R_3$ may be the same or different and each is hydrogen, optionally substituted lower alkyl, or lower alkyl substituted by cycloalkyl, aryl, or by a mono- or bicylic monoaza or diazacylic radical optionally substituted by one to three hydroxy or lower alkoxy groups or $R_2$ or $R_3$ each represents together with the -CH-N< residue to which it is attached, the atoms required to complete the 2-pyrrolidinyl group; and n is 0, 1, 2 or 3; as well as the esters and salts with physiologically acceptable alcohols, or acids or bases, respectively; and all optical isomers thereof.

Preferred are compounds of formula I wherein R and $R_1$ may be the same or different and each is hydrogen deuterium. methyl, ethyl, n-propyl, isopropyl, n-butyl, isobutyl, secondary butyl, tertiary butyl, optionally substituted by imidazolyl, indolyl, benzyl groups optionally substituted by one to three hydroxy groups, lower alkoxy, lower alkylthio. amino or carboxy groups or $R_1$ represents

BAD ORIGINAL

together with the -C(R)-N< residue to which it is attached, the atoms required to complete a 2-pyrrolidinyl group; $R_2$ and $R_3$ may be the same or different and each can be hydrogen, methyl, isopropyl, isobutyl, benzyl, aminobutyl, hydroxymethyl, 1-hydroxyethyl, 2-methylthioethyl, imidazolymethyl, or indolylmethyl, or $R_2$ or $R_3$, respectively, together with the -CH-N< residue to which it is attached, represents the atoms required to complete a 2-pyrrolidinyl group; and n is 0,1,2 or 3; as well as the esters and salts with pharmaceutically acceptable alcohols, or acids or bases, respectively; and all optical isomers thereof.

Especially valuable and suitable for said utility are compounds of formula I, wherein R is hydrogen; $R_1$ is methyl; $R_2$ and $R_3$ may be the same or different and each is hydrogen, methyl, isopropyl, isobutyl, aminobutyl, hydroxymethyl, 1-hydroxyethyl, 2-methylthioethyl, imidazolylmethyl or indolylmethyl, benzyl or $R_2$ or $R_3$ respectively together with the -CR-N< or -CH-N< residue to which it is attached represents the atoms required to complete a 2-pyrrolidinyl group; and n is 0, 1, 2 or 3; and the esters and salts thereof with physiologically acceptable alcohols or acids or bases, respectively; and all optical isomers thereof.

The production of the compounds of formula I is fully described in our copending British Patent Application No. 48264/77.

The agents according to the invention are prepared in a manner which is in itself known by intimate mixing and grinding of active compounds of the formula I with suitable carriers, if desired with addition of dispersing agents or solvents which are inert towards the active compounds.
The active compounds may exist, and be used, in the following processing forms:

Solid processing forms: dusting agents, sprinkling agents, granules, coated granules, impregnated granules and homogeneous granules;

Active compound concentrates which are dispersible in water: wettable powders, pastes and emulsions:

Liquid processing forms: solutions.

In order to prepare solid processing forms (dusting agents, sprinkling agents and granules), the active compounds

are mixed with solid carriers. Examples of carriers which can be used are kaolin, talc, bolus, loess, chalk, limestone, lime grits, attapulgite, dolomite, diatomaceous earth, precipitated silica, alkaline earth metal silicates, sodium and potassium aluminosilicates (feldspars and micas), calcium and magnesium sulphates, magnesium oxide, ground plastics, fertilisers, such as ammonium sulphate, ammonium phosphate, ammonium nitrate and urea, ground vegetable products, such as cereal flour, bark flour, wood flour, nutshell flour, cellulose powder, plant extract residues, active charcoal and the like, in each case on their own or as mixtures with one another.

Granules can be prepared by, for example, dissolving the active compounds in an organic solvent, applying the solution thus obtained to a granulated material, for example attapulgite, $SiO_2$, granicalcium or bentonite, and then again evaporating the organic solvent.

It is also possible to prepare polymer granules by, for example, impregnating finished, porous polymer granules such as urea/formaldehyde polymers, polyacrylonitrile and polyesters, having a specific surface area and an advantageous predetermined absorption/desorption ratio, with the active compounds, for example in the form of their solutions (in a low-boiling solvent) and removing the solvent. Such polymer granules can be applied in the form of micro-granules with bulk densities of, preferably, 300 g/litre to 600 g/litre, also with the aid of atomisers. Atomising can be effected

over extensive treatment areas by means of aircraft.

Granules can also be obtained by compacting the carrier with the active compounds and additives and then comminuting the mixture.

Furthermore, it is possible to add to these agents additives which stabilise the active compound and/or nonionic, anionic and cationic materials which, for example, improve the adhesion of the active compounds to plants and parts of plants (adhesives and glues) and/or ensure better wettability (wetting agents) and dispersibility (dispersing agents). It is possible to use, for example, the following materials as adhesives: olein/lime mixture, cellulose derivatives (methylcellulose and carboxymethylcellulose), hydroxyethylene glycol ethers of monoalkylphenols and dialkylphenols having 5 to 15 ethylene oxide residues per molecule and 8 to 9 carbon atoms in the alkyl radical, ligninsulphonic acid, its alkali metal salts and alkaline earth metal salts, polyethylene glycol ethers (Carbowaxes), fatty alcohol polyglycol ethers having 5 to 20 ethylene oxide residues per molecule and 8 to 18 carbon atoms in the fatty alcohol part, condensation products of ethylene oxide and propylene oxide, polyvinylpyrrolidones, polyvinyl alcohols, condensation products of urea/formaldehyde and latex products.

Water-dispersible active compound concentrates, i.e. wettable powders, pastes and emulsion concentrates, are agents which can be diluted with water to any desired concentration. They consist of active compound, carrier, if desired additives

BAD ORIGINAL

which stabilise the active compound, surface-active substances and anti-foaming agents and, if desired, solvents.

The wettable powders and pastes are obtained by mixing and grinding the active compounds with dispersing agents and pulverulent carriers in suitable devices until homogeneity is achieved. Examples of carriers are those mentioned above for the solid processing forms. In some cases it is advantageous to use mixtures of different carriers. Examples of dispersing agents which can be used are: condensation products of sulphonated naphthalene and sulphonated naphthalene derivatives with formaldehyde, condensation products of naphthalene or of naphthalenesulphonic acids with phenol and formaldehyde, and alkali metal salts, ammonium salts and alkaline earth metal salts of ligninsulphonic acid, as well as alkylarylsulphonates, alkali metal salts and alkaline earth metal salts of dibutylnaphthalenesulphonic acid, fatty alcohol sulphates, such as salts of sulphated hexadecanols and heptadecanols, and salts of sulphated fatty alcohol polyethylene glycol ethers, the sodium salt of oleyl methyl tauride, di-tertiary acetylene glycols, dialkyldilaurylammonium chloride and alkali metal salts and alkaline earth metal salts of fatty acids.

Examples of anti-foaming agents which can be used are silicones.

The active compounds are mixed, ground, sieved and strained with the abovementioned additives, in such a way that the particle size of the solid component does not exceed 0.02

BAD ORIGINAL

to 0.04 mm in the case of wettable powders and 0.03 mm in the case of pastes. To prepare emulsion concentrates and pastes, dispersing agents, such as have been listed in the preceding sections, organic solvents and water are used. Examples of suitable solvents are the following: alcohols, benzene, xylenes, toluene, dimethylsulphoxide, N,N-dialkylated amides and trialkylamines. The solvents must be virtually odourless and inert towards the active compounds and should not be readily combustible.

Furthermore, the agents according to the invention can be used in the form of solutions. For this purpose, the active compound or several active compounds of the formula I is/are dissolved in suitable organic solvents, solvent mixtures, water or mixtures of organic solvents with water.

The content of active compound in the agents described above is between 0.1 and 95%, preferably between 1 and 80%.

Use forms can be diluted down to 0.001%. The amounts used are as a rule 0.1 to 10 kg of active substance/hectare, preferably 0.25 to 5 kg of active substance/hectare. The active compounds of the formula I can be formulated, for example, as follows (parts are parts by weight):

Dusting agents:

The following substances are used for the preparation of a) a 5% strength dusting agent and b) a 2% strength

dusting agent:

a) 5 parts of (1-RS)-1-(L-alanylamino)ethanephosphonous acid and 95 parts of talc,

b). 2 parts of (1-RS)-1-(L-alanylamino)-2-methylpropanephosphonous acid

1 part of highly disperse silica and

97 parts of talc.

The active compounds are mixed and ground with the carriers.

Granules:

The following substances are used for the preparation of 5% strength granules:

5 parts of (1-R)-1-(L-alanyl-L-alanyl-L-alanylamino)-ethanephosphonous acid,

0.25 part of epichlorohydrin,

0.25 part of cetylpolyethylene glycol ether containing 8 mols of ethylene oxide,

3.50 parts of polyethylene glycol and

91 parts of kaolin (particle size 0.3 to 0.8mm).

The active substance is mixed with the epichlorohydrin and dissolved in acetone, , after which polyethylene glycol and cetyl polyethylene glycol ether are added. The solution thus obtained is sprayed onto kaolin and the acetone is subsequently evaporated off in vacuo.

Wettable powders:

The following constituents are used for the preparation of a) a 50% strength wettable powder, b) a 25% strength wettable powder and c) a 10% strength wettable powder:

BAD ORIGINAL

a) 50 parts of (1-RS)-1-(L-valylamino)-ethanephosphonous acid,
5 parts of sodium dibutylnaphthylsulphonate,
3 parts of a naphthalenesulphonic acids/phenolsulphonic acids/formaldehyde condensate, 3:2:1,
20 parts of kaolin and
22 parts of Champagne chalk;

b) 25 parts of the diethanolamine salt of the above active compound,
5 parts of the sodium salt of oleylmethyltauride,
2.5 parts of a naphthalenesulphonic acids/formaldehyde condensate,
0.5 part of carboxymethylcellulose,
5 parts of neutral potassium aluminium silicate and
62 parts of kaolin;

c) 10 parts of (1-R)-1-(L-alanylamino)-ethanephosphonous acid,
3 parts of a mixture of the sodium salts of saturated fatty alcohol sulphates,
5 parts of a naphthalenesulphonic acids/formaldehyde condensate and
82 parts of kaolin.

The active compound indicated is absorbed onto the appropriate carriers (kaolin and chalk) and is then mixed and ground. Wettable powders of excellent wettability and suspensibility are obtained. Suspensions of any desired active compound concentration can be obtained from such wettable powders by dilution with water. Suspensions of this type

are used for combatting weeds and wild grasses in crops of plants by the pre-emergence process, and for the treatment of lawns.

Paste:

The following substances are used for the preparation of a 45% strength paste:

45 parts of (1-R)-1-(L-alanyl-L-alanyl-L-alanyl-L-alanylamino)-ethanephosphonous acid

5 parts of sodium aluminium silicate,

14 parts of cetyl polyethylene glycol ether containing 8 mols of ethylene oxide,

1 part of oleyl polyethylene glycol ether containing 5 mols of ethylene oxide,

2 parts of spindle oil,

23 parts of water and

10 parts of polyethylene glycol.

The active compound is intimately mixed and ground with the additives in apparatus which is suitable for this purpose. A paste is obtained, from which suspensions of any desired concentration can be prepared by dilution with water. The suspensions are suitable for the treatment of lawns.

Emulsion concentrate:

For the preparation of a 25% strength emulsion concentrate.

25 parts of (1-R)-1-(L-alanyl-L-alanylamino)-ethanephosphonous acid,

5 parts of a mixture of nonylphenol polyoxyethylene and calcium dodecylbenzenesulphonate,

35 parts of 3,5,5-trimethyl-2-cyclohexen-1-one and

35 parts of dimethylformamide

are mixed with one another. This concentrate can be diluted with water to give emulsions of suitable concentrations.

Instead of the particular active compound indicated in the above formulation examples, it is also possible to use other compounds from amongst those included in the formula I.

The active compounds contained in the agents according to the invention influence the plant growth in various ways. Thus they inhibit, delay or suppress, in particular, the growth and germination. They therefore have a post-emergent herbicidal action as well as a growth inhibiting action.

Agents according to the invention, which contain at least one compound of the formula I as the active component, are suitable, in particular, for inhibiting and suppressing plant growth in monocotyledonous and dicotyledonous plants by post-emergent treatment of the sown areas or of the plants, such as shrubs, trees, leguminous crops, sugar cane, onion and potato tubers, fruit trees and vines and, in particular, grasses, cereal crops, tobacco, soya and ornamental plants.

BAD ORIGINAL

The action achieved, in particular, by the active compounds of the formula I is the desired reduction in plant size, especially the height of growth. In general, a certain change in the form of the plant is associated with this. In direct association with the reduction of the height of growth, the plant is strengthened. The leaves and stem develop more strongly. The resistance to kinking of monocotyledonous plants is increased by shortening the internodal distances. Crop losses due to a thunderstorm, continuous rain and the like, which usually lead to lodging of cereal crops and leguminous crops, can be largely prevented in this manner and harvesting can thus be made easier. As a side effect, reduced height of growth of useful plants leads to a saving of fertilisers. This also applies, in the same way, to ornamental plants, ornamental lawns, sports fields or other grassed areas.

However, one of the most important problems of pure grass plantings is the actual cutting of the grass, whether in public parks in urban areas, on industrial sites, on playing fields or alongside motor-roads, aircraft landing strips, railway embankments or the sloping banks of waterways. In all these cases it is necessary to mow the lawn or cut the growth of grass periodically. This is not only very expensive in terms of labour and machinery, but, in the transport sector, also involves considerable dangers for the personnel concerned and for the occupants of vehicles.

BAD ORIGINAL

There is therefore, particularly in areas with large traffic networks, an urgent need on the one hand to maintain and care for the greensward which is necessary to strengthen road verges and embankments on traffic routes and, on the other hand, to keep it at a medium height of growth during the whole vegetation period, using simple measures. This need is met in a very favourable manner by applying active compounds of the formula I.

By treating trees, shrubs and hedges, in particular in urban and industrial areas, with compounds of the formula I, the labour-intensive mowing work can be reduced in an analogous manner.

The growth of shoots and/or the fertility of fruit trees and vines can also be advantageously influenced by using the active compounds of the formula I.

Ornamental plants with pronounced longitudinal growth can be grown as compact pot plants by treatment with the active compounds mentioned.

The active compounds of the formula I are also used for inhibiting the growth of undesired side shoots, for example in tobacco and ornamental plants, whereby the labour-intensive manual breaking off of these shoots is avoided, and furthermore for the inhibition of sprouting in the case of stored tubers, for example in the case of tubers of ornamental plants and in the case of onions and potatoes, and finally for increasing the yield in the case of crop plants having an intense vegetative growth, such as soya and sugar cane, by accelerating the transition from the vegetative growth phase to the generative growth phase through application of active compounds of the formula I.

The active compounds of the formula I are preferably employed for inhibiting the growth of weeds, including perennial weeds, grasses, especially perennial grasses, such as Cyperus species and the like, and of cereal crops, tobacco, soya and ornamental plants.

The amounts used vary and depend on the time of application. In general, they are between 0.1 and 5 kg of active compound per hectare for the treatment of existing crops, preferably up to 4 kg per hectare.

The action of the active compounds according to the definition is directed towards the germinating seed (pre-emergent action) but is preferably directed towards the parts of the plant which are above ground ( contact action) in particular the leaves.

The action as a powerful growth inhibitor is shown by the fact that most of the species of plants treated in a post-emergent manner stop growing after an experimental period of three weeks, the parts of the plant treated assuming a dark-green coloration. However, the leaves do not fall.

In the case of some species of plants, this growth inhibition already occurs at a dosage of 0.5 kg/hectare and less and within several days after treatment.

Since not all species of plants are equally powerfully inhibited, it is possible to use the active compounds selectively when a particular low dosage is chosen.

The active compounds of the formula I are also interesting combination partners for a number of herbicides of the diphenyl ether, phenylurea and triazine series for use on cereal crops, maize and sugar cane and in fruit growing and viticulture.

In areas with an increased danger of erosion, the active compounds of the formula I can be used as growth inhibitors on the most diverse crops.

In this case, the weed cover is not removed but only inhibited to such an extent that it can no longer compete with the crop plants.

The following Examples further illustrate the present invention.

Use Examples 1 and 2

The following test methods were used to demonstrate the usefulness of the active compounds as herbicides (post-emergent) and as growth inhibitors:

Post-emergent herbicidal action (contact herbicide)

The plants of 7 weeds and crop plants, both monocotyledonous and dicotyledonous, were sprayed after emergence ( in the 4-leaf to 6-leaf stage) with an aqueous active compound emulsion in a dosage of 4 kg of active substance per hectare, and the plants were kept at $24^{o}$- $26^{o}C$ and a relative atmospheric humidity of 45-60%. The test was evaluated 5 days and 15 days after treatment and the result is given in the following Table I.

BAD ORIGINAL

TABLE 1 - POST EMERGENT HERBICIDAL ACTION

| Plant / Compound | Avena Sativa | Setaria italica | Lolium perenne | Solanum lycopersicum | Sinapis alba | Stellaria media | Phaseolus vulgaris |
|---|---|---|---|---|---|---|---|
| $CH_3$ $CH_3$<br>$H_2NCHCONHCHPO_2H_2$<br>L R | 4 | 2 | 3 | 3 | 2 | 2 | 3 |
| $CH_3$ $CH_3$ $CH_3$<br>$H_2NCHCO[NHCHCO]_2NHCHPO_2H_2$<br>L L R | 5 | 3 | 4 | 2 | 2 | 4 | - |

9 = plants undamaged (as untreated control)

1 = plants completely dead

8-2 = intermediate stages of damage

The results demonstrate that the compounds according to the present invention which were tested exhibited a pronounced contact herbicidal action on some plants and, as a symptom of the growth inhibiting properties, halted the growth of many plants.

BAD ORIGINAL

Growth inhibition in grasses

Seeds of the grasses Lolium perenne, Poa pratensis, Festuca ovina and Dactylis glomerata were sown in plastic bowls containing an earth/peat/sand mixture (6:3:1) and were watered normally. Every week the emergent grasses were cut back to a height of 4 cm and, 40 days after being sown and 1 day after the last cutting, were sprayed with aqueous spray liquors of an active compound of the formula I. The amount of active compound corresponded to 5 kg of active substance per hectare. The growth of the grasses was evaluated 10 and 21 days after application.

Growth inhibition in cereals

Spring wheat (Triticum aestivum), spring barley (Hordeum vulgare) and rye (Secale) were sown in sterilised earth in plastic beakers and the plants were grown in a greenhouse. 5 days after being sown, the cereal shoots were treated with a spray liquor of the active compound. The application to the leaves corresponded to 6 kg of active compound per hectare. Evaluation is carried out after 21 days.

The compounds of Examples 3-6, 8, 17 and 18 caused a pronounced inhibition of growth of grasses, the compounds of Examples 8, 13 and 4 were most active inhibiting the growth of cereals.

Inhibition of the growth of side shoots of tobacco plants.

Eight weeks after sowing, tobacco Nicotiana tabacum (variety Xanthi) are transplanted to pots in a greenhouse, normally watered and treated weekly with nutrient solution. Two weeks after potting, there are chosen per treatment three plants; of these plants one remains untopped and from the two others the growth tip is removed five days before treatment.

Per plant there is then sprayed, laterally from above onto the leading shoot and the upper leaf axils, 10 ml of liquor containing active substance (concentrations: 2.6; 1.3 and 0.6 % corresponding to 6.3 and 1.5 kg per hectare in the open). A part of the liquor consequently runs down the petioles and into the remaining lower leaf axils (contact with side-shoot buds).

After setting up of the tests in the greenhouse and watering, the tests are evaluated 4 and 14 days after application of the test liquor.

Contact effect and systemic effect are evaluated separately.

Contact effect: Assessment of the 6 uppermost side shoots;

Syternic effect: Assessment of the uppermost side shoots.

Excellent results are obtained in these tests with the active substances of the invention, such as in particular with those of the Example 7.

Example 3

a) RS-1-Aminoethanephosphonous acid (8.25g., 0.075M) was dissolved in water (375 ml.) and ethanol (190 ml.) and the solution was cooled to $10^{o}$. Sodium bicarbonate (A.R. grade, 12.75g., 0.15M) was added portionwise with stirring and the resulting solution was cooled to $0^{o}$. A solution of the N-hydroxysuccinimide ester of N-benzyloxycarbonyl-L-alanine (24g., 0.075M) in hot ethanol (260 ml.) was added over a period of 10 minutes maintaining the internal temperature at $0^{o}$.

The heterogeneous mixture was stirred for 2 hours at $0^{o}$ and then 24 hours at room temperature. The clear solution was evaporated at room temperature to give a white gummy solid. Treatment of this residue with cold dilute hydrochloric acid (2N., 150 ml.) gave a white powdery solid which was allowed to stand 2 hours at room temperature. The mixture was diluted with an equal volume of water and allowed to stand 24 hours at $0^{o}$. Filtration gave a mixture of the 1-(S) and 1-(R)-diastereomers of 1-[(N-benzyloxycarbonyl-L-alanyl)amino]-ethanephosphonous acid [12.2g., m.p. 175-6°, $[\alpha]_D^{20}$ -45.7°(2% in glacial acetic acid].

BAD ORIGINAL

b) This mixture of diastereomers of 1-[(N-benzyloxycarbonyl-L-alanyl)amino]-ethanephosphonous acid (12g.) was added to a solution of hydrogen bromide in glacial acetic acid (50 ml., 45% w/w) at 0° and the mixture was stirred for thirty minutes. The solution was allowed to warm up to room temperature and then evaporated to an oily residue. This residue was dissolved in dry methanol (60 ml.) and propylene oxide was carefully added with cooling. The mixture was stirred for two hours at room temperature and allowed to crystallise at 0°. It gave a mixture of diastereomers of 1-(L-alanylamino)-ethanephosphonous acid [m.p. 276° decomp., $[\alpha]_D^{20}$ -75.6° (2% in water)].

Example 4

The procedure described in Example 3a was repeated using (IR) -1-aminoethanephosphonous acid instead of RS-1-aminoethanephosphonous acid to give (IR) -1-[(N-benzyloxycarbonyl-L-alanyl)amino]-ethanephosphonous acid. m.p. 180-2° decomp., $[\alpha]_D^{20}$ -60° (2% in glacial acetic acid). [The (+)-α-methylbenzylamine salt of this compound had m.p. 206-7° decomp. and $[\alpha]_D^{20}$ -44.7° (2% in methanol)].

By the same procedure described in Example 3b, this compound was converted to (1R) -1-(L-alanylamino)-ethanephosphonous acid. m.p. 276° decomp., $[\alpha]_D^{20}$ -80.1° (2% in water).

Example 5

a) (1S) -1-Aminoethanephosphonous acid (3.4g., 0.031M) was dissolved in water (155 ml.) and ethanol (186 ml.) and the solution was cooled to 10°. Sodium bicarbonate (A.R.grade, 5.25g., 0.062M) was added portionwise with stirring and the resulting solution was cooled to 0°. A solution of the N-hydroxysuccinimide ester of N-benzyloxy-carbonyl-L-alanine (9.9g., 0.031M) in hot ethanol (44 ml.) was added over a period of 10 minutes maintaining the internal temperature of 0°. This mixture was stirred for 2 hours at 0° and 24 hours at room temperature. The clear solution was evaporated at room temperature to give a gummy solid. This material was stirred with ethanol (50 ml.) and the insoluble material was removed by filtration. The filtrate was evaporated to dryness, redissolved in absolute ethanol and made just acid with a solution of hydrogen chloride in ethanol. The cloudy solution was diluted with ether (75 ml.) and a white solid was obtained which was dissolved in 75 ml. ethanol and clarified with

BAD ORIGINAL

filter-aid. Evaporation of the filtrate gave (1S) - [(N-benzyloxycarbonyl-L-alanyl)amino] -ethanephosphonous acid m.p. 143-5° decomp., $[\alpha]_D^{20}$ + 33.8° (2% in glacial acetic acid. [The (+)-α-methylbenzylamine salt of this compound had m.p. 205-6° decomp., and $[\alpha]_D^{20}$ + 19.8° (2% in methanol)].

b) By the same procedure described in Example 3b, this compound was converted to [1-(S)] -1-(L-alanylamino)-ethanephosphonous acid m.p. 274° decomp., $[\alpha]_D^{20}$ + 115° (2% in water).

Example 6.

a) The procedure described in Example 3a was repeated to give a mixture of the 1S- and 1R- -diastereomers of 1-[(N-benzyloxycarbonyl-L-alanyl)amino] -ethanephosphonous acid m.p. 175-6°, $[\alpha]_D^{20}$ -45.7° (2% in glacial acetic acid); (the filtration liquors from which it was obtained being set aside for use in Example 6b). This solid was converted to its (+)-α-methylbenzylamine salt in ethanol solvent and recrystallised from ethanol to constant melting point and constant specific rotation, identical to that described in Example 3a, namely, m.p. 206-7° decomp., and $[\alpha]_D^{20}$ -44.7° (2% in methanol).

By the procedure described in Example 3b this salt was converted to (1R) -1-(L-alanylamino)-ethanephosphonous acid m.p. 276° decomp., $[\alpha]_D^{20}$ -80.1° (2% in water).

b) The filtration liquors obtained in Example 6a were evaporated to an oil which was dissolved in ethanol and the solid which formed was collected by filtration. The filtrate was evaporated to dryness and the oil so obtained was stirred with acetone. The waxy solid which formed was collected by filtration and the filtrate again evaporated to dryness. The resultant oil was dissolved in water, extracted successively with ether, propylene oxide, and finally petroleum ether. Evaporation of the aqueous portion gave an oil which on treatment with (+)-α-methylbenzylamine in isopropanol solvent gave the (+)-α-methylbenzylamine salt of (1S) -1-[(N-benzyloxycarbonyl-L-alanyl)-amino] -ethanephosphonous acid m.p. 205-6° decomp., $[\alpha]_D^{20}$ +19.5° (2% in methanol), identical to that described in Example 3a.

By the procedure described in Example 3b this salt was converted to (1S) -1-(L-alanylamino)-ethanephosphonous acid m.p. 275° decomp., $[\alpha]_D^{20}$ + 115° (2% in water) identical to that obtained in Example 3b.

Example 7

a) (1R) -1-(L-alanylamino)-ethanephosphonous acid (1.8g., 0.01M) was dissolved in a mixture of water (50 ml.)

and ethanol (25 ml.) and the solution was cooled to 10°. sodium bicarbonate (A.R. grade 1.7g., 0.02M) was added portionwise and the solution was cooled to 0°. A solution of the N-hydroxysuccinimide ester of N-benzyloxycarbonyl-L-alanine(3.2g., 0.01M) in hot ethanol(35 ml.) was added over a period of 10 minutes maintaining the internal temperature at 0°. The heterogeneous mixture was stirred for 2 hours at 0° and then 24 hours at room temperature. The resulting clear solution was evaporated at room temperature to give a white gummy solid. This residue was stirred with dilute hydrochloric acid(2N.25 ml for 2 hours at room temperature and allowed to crystallise at 0°. Filtration gave (1R) -1-[(N-benzyloxycarbonyl-L-alanyl)-L-alanylamino]-ethanephosphonous acid, having melting point 221°, $[\alpha]_D^{20}$ - 73.6° (1% glacial acetic acid).

b) By the same procedure as described in Example 3b (1R) -1-[(N-benzyloxycarbonyl-L-alanyl)-L-alanylamino]-ethanephosphonous acid was converted to [1-(R)]-1-(L-alanyl-L-alanylamino)-ethanephosphonous acid, having melting point 263-264°, $[\alpha]_D^{20}$ - 112.7°(1% in water).

BAD ORIGINAL

Example 8

The procedure described in Example 7a was repeated using (1R) -1-(L-alanyl-L-alanylamino)-ethanephosphonous acid instead of (1R) -1-(L-alanylamino)-ethanephosphonous. acid to give (1R) -1- (N-benzyloxycarbonyl-L-alanyl)-(L-alanyl-L-alanylamino)-ethanephosphonous acid, of melting point 242° $[\alpha]_D^{20}$ -114.3° (1% in 2N NaOH).

By the same procedure described in Example 3b, this compound was converted to (1R) -1-(L-alanyl-L-alanyl-L-alanylamino)-ethanephosphonous acid, of melting point 266-267°, $[\alpha]_D^{20}$ - 136.3° (1% in water).

Example 9

The procedure described in Example 7a was repeated using (1R) -1-(L-alanyl-L-alanyl-L-alanylamino)-ethanephosphonous acid instead of (1R) -1-(L-alanylamino)-ethanephosphonous acid to give (1R) -1- (N-benzyloxycarbonyl-L-alanyl)-L-alanyl-L-alanyl-L-alanylamino -ethanephosphonous acid, of melting point 274-275°, $[\alpha]_D^{20}$ - 133° (0.4% in 2N NaOH).

By the same procedure described in Example 3b this compound was converted to (1R) -1-(L-alanyl-L-alanyl-L-alanyl-L-alanylamino)ethanephosphonous acid, of melting point 288-289°, $[\alpha]_D^{20}$ - 154.2° (0.6% in water).

BAD ORIGINAL

Example 10

a) The procedure described in Example 3a was repeated using RS-1-amino-2-methylpropanephosphonous acid instead of RS-1-aminoethanephosphonous acid to give a mixture of the 1R- and 1S-diastereomers of 1-[(N-benzyloxycarbonyl-L-alanyl) amino]-2-methylpropanephosphonous acid as a viscous pale yellow oil, $[\alpha]_D^{23}$ - 17° (2% in ethanol).

b) By the same procedure described in Example 3b, this product was converted to a mixture of the diastereomers of 1-(L-alanylamino)-2-methylpropanephosphonous acid, m.p. 260° decomp., $[\alpha]_D^{22}$ -40° (1 % in water).

Example 11

(a) The procedure described in Example 3a was repeated using [1-(-)]-1-amino-2-methylpropanephosphonous acid instead of RS-1-aminoethanephosphonous acid to give [1-(-)]-1-[(N-benzyloxycarbonyl-L-alanyl)-amino]-2-methyl-propanephosphonous acid m.p. 174-5°, $[\alpha]_D^{20}$ -70°, (1% in glacial acetic acid). [The (+)-α-methylbenzylamine salt of this compound had m.p.183-5° and $[\alpha]_D^{20}$ -43.9° (2 % in methanol)

(b) By the same procedure as described in Example 3b, this compound was converted to [(1-(-)]-1-(L-alanylamino)-2-methylpropanephosphonous acid m.p. 271-2° decomp., $[\alpha]_D^{20}$ 54° (1% in water)

Example 12

(a) The procedure described in Example 5a was repeated using [1-(+)]-1-amino-2-methylpropanephosphonous acid instead of [1-(S)]-1-aminoethanephosphonous acid to give [1-(+)]-1-[(N-benzyloxycarbonyl-L-alanyl)amino]-2-methylpropanephosphonous acid as an oil. [The (+)-α-methylbenzyl-amine salt of this compound had m.p. 184-5° and $[\alpha]_D^{20}$ + 15.7° (2 % in methanol)

(b) By the same procedure as described in Example 3b, this compound was converted to [1-(+)]-1-(L-alanylamino)-2-methylpropanephosphonous acid m.p. 263-4° decomp. $[\alpha]_D^{20}$ + 79.6° (1 % in water)

Example 13

a) The procedure described in Example 3a was repeated using the N-hydroxysuccinimide ester of N-benzyloxycarbonyl-L-valine instead of the N-hydroxysuccinimide ester of N-benzyloxycarbonyl-L-alanine. A mixture of the 1S- and 1R-diastereomers of 1-[(N-benzyloxycarbonyl-L-valyl)amino]-ethanephosphonous acid, m.p. 202°, $[\alpha_D^{-20}$ -38.5° (2 % in glacial acetic acid) was obtained.

BAD ORIGINAL

b) By the same procedure described in Example 3b this product was converted to a mixture of diastereomers of 1-(L-valylamino)ethanephosphonous acid, m.p. > 260°, $[\alpha]_D^{25}$ -30° (1 % in water).

Example 14

a) The procedure described in Example 3a was reapeated using the N-hydroxysuccinimide ester of N-benzyloxycarbonyl-D-alanine instead of the N-hydroxysuccinimide ester of N-benzyloxycarbonyl-L-alanine. A mixture of the 1-(S)- and 1-(R)-diastereomers of 1-[(N-benzyloxycarbonyl-D-alanyl)amino]-ethanephosphonous acid, m.p. 175-176°, $[\alpha]_D^{22}$ +51.5° (2% in glacial acetic acid) was obtained

b) By the same procedure described in Example 3b this product was converted to a mixture of diastereomers of 1-(D-alanylamino)-ethanephosphonous acid, m.p. > 260°, $[\alpha]_D^{24}$ +65.5° (2% in water)

Example 15

a) The procedure described in Example 3a was repeated using the N-hydroxysuccinimide ester of N-benzyloxycarbonyl-glycine instead of the N-hydroxysuccinimide ester of N-benzyloxycarbonyl-L-alanine. A racemic mixture of the S- and R-enantiomers of 1-(N-benzyloxycarbonylglycyl)-aminoethanephosphonous acid, m.p. 86-87° was obtained.

BAD ORIGINAL

b) By the same procedure described in Example 3b this product was converted to the racemate of 1-glycylaminoethanephosphonous acid, m.p. 254-255°.

Example 16

1RS-1-(L-alanylamino)-ethanephosphonous acid (1.8014g, 0.01M) was dissolved in a solution of cold water (10 ml) and sodium hydroxide (0.40g., 0.01M) and the mixture was stirred for five minutes. The mixture was evaporated to dryness, stirred with absolute ethanol, and filtered to give the sodium salt of 1RS-1-(L-alanylamino)-ethanephosphonous acid.

Example 17

1RS-1-(L-alanylamino)-ethanephosphonous acid (1g.) was dissolved in a solution of absolute ethanol saturated with dry hydrogen chloride (50 ml). The mixture was evaporated to dryness to give the hydrochloride of 1RS-1-(L-alanylamino) ethanephosphonous acid.

Example 18

In a way analogous to the foregoing examples, the following compounds have been obtained as well.

1-(glycylamino)-anisyl-phosphonous acid m.p.255° (decomposition)

1-(glycylamino)-2-methylpropanephosphonous acid, m.p. 253°

1-(L-phenylalanylamino)-ethanephosphonous acid, m.p. 172°

glycylaminomethylphosphonous acid.

WHAT WE CLAIM IS:

1. An agent for influencing plant growth comprising, in addition to carriers and/or other additives, at least one compound of formula:-

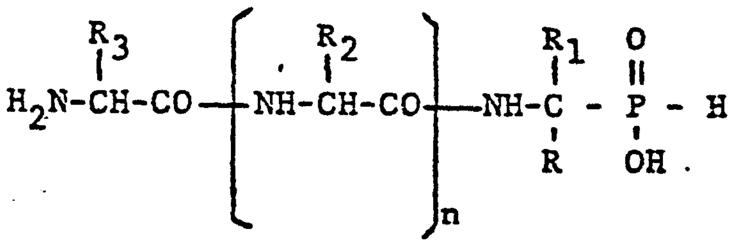

(I)

or the corresponding zwitterion form in which R and $R_1$ may be the same or different and each can be hydrogen, deuterium or an optionally substituted lower alkyl group, lower alkenyl, lower alkynyl, cycloalkyl, aryl or heterocyclic radical containing one or more oxygen, nitrogen or sulphur atoms and which may be fused to an aromatic ring, a lower alkyl group substituted by a cycloalkyl radical, a lower alkyl group substituted by an aryl radical, a lower alkyl group substituted by a heterocyclic radical as defined above, or R and $R_1$ together form a polymethylene

BAD ORIGINAL

chain optionally interrupted by an oxygen, nitrogen or sulphur atoms, or$_1$ represents, together with the C(R) - N< residue to which it is attached, the atoms required to complete a heterocyclic radical; and $R_2$ and $R_3$ may be the same or different and each can be hydrogen, optionally substituted lower alkyl, cycloalkyl, aryl or lower alkyl substituted by a cycloalkyl radical, lower alkyl substituted by a heterocyclic radical containing one or more nitrogen atoms; a heterocyclic radical containing one or more nitrogen atoms; or $R_2$ and $R_3$, independently, together with the C(H)-N residue to which each is attached, may each represent the atoms required to complete a heterocyclic radical; and n is 0, 1, 2, or 3; as well as the esters and salts thereof and all optical isomers thereof.

2. An agent as claimed in claim 1 wherein R and $R_1$ may be the same or different and each is hydrogen, deuterium, optionally substituted lower alkyl, or lower alkyl substituted by cycloalkyl, aryl or by a mono- or bicyclic monoaza-or diazacyclic radicals, optionally substituted by one to three hydroxy or lower alkoxy groups; or $R^1$ represents, together with the -CR-N< residue to which it is attached, the atoms required to complete a 2-pyrrolidinyl group; $R_2$ and $R_3$ may be the same or different and each is hydrogen, optionally substituted lower alkyl, or lower alkyl substituted

BAD ORIGINAL

by cycloalkyl, aryl, or by a mono- or bicylic monoaza or diazacylic radical optionally substituted by one to three hydroxy or lower alkoxy groups or $R_2$ or $R_3$ each represents together with the -CH-N< residue to which it is attached, the atoms required to complete the 2-pyrrolidinyl group; and n is 0, 1, 2 or 3; as well as the esters and salts with physiologically acceptable alcohols, or acids or bases, respectively; and all optical isomers thereof.

3. An agent as claimed in claim 1 wherein R and $R_1$ may be the same or different and each is hydrogen deuterium. methyl, ethyl, n-propyl, isopropyl, n-butyl, isobutyl, secondary butyl, tertiary butyl, optionally substituted by imidazolyl, indolyl, benzyl groups optionally substituted by one to three hydroxy groups, lower alkoxy, lower alkylthio, amino or carboxy groups or $R_1$ represents together with the -C(R)-N< residue to which it is attached, the atoms required to complete a 2-pyrrolidinyl group; $R_2$ and $R_3$ may be the same or different and each can be hydrogen, methyl, isopropyl, isobutyl, benzyl, aminobutyl, hydroxymethyl, 1-hydroxyethyl, 2-methylthioethyl, imidazoly-methyl, or indolylmethyl, or $R_2$ or $R_3$, respectively, together with the -CH-N< residue to which it is attached, represents the atoms required to complete a 2-pyrrolidinyl group; and n is 0,1,2 or 3; as well as the esters and salts with physiologically acceptable alcohols, or acids or bases, respectively; and all optical isomers thereof.

4. An agent as claimed in claim 1 wherein R is hydrogen; $R_1$ is methyl; $R_2$ and $R_3$ may be the same or different and each is hydrogen, methyl, isopropyl, isobutyl, aminobutyl, hydroxymethyl, 1-hydroxyethyl, 2-methylthioethyl, imidazolylmethyl or indolylmethyl, benzyl or $R_2$ or $R_3$ respectively, together with the -CR-N or -CH-N residue to which it is attached represents the atoms required to complete a 2-pyrrolidinyl group; and n is 0, 1, 2 or 3; and the esters and salts thereof with physiologically acceptable alcohols or acids or bases, respectively; and all optical isomers thereof.

5. An agent as claimed in claim 1 wherein the agent is in the form of a solid processing form, an active compound concentrate which is dispersible in water or a liquid processing form.

6. An agent as claimed in claims 1 and 5, wherein the content of the compound of formula I is between 0.1 to 95 %.

7. An agent as claimed in claims 1 and 5 wherein the content of the compound of formula I is between 1 and 80 %.

8. An agent for influencing plant growth containing as active ingredient 1-(D-alanylamino)-ethanephosphonous acid.

9. An agent according to claim 1 containing as active ingredient 1-(L-alanylamino)-ethanephosphonous acid.

10. An agent according to claim 1 containing as active ingredient 1-glycylamino-ethanephosphonous acid.

BAD ORIGINAL

11. An agent according to claim 1 containing as active ingredient 1-(L-valylamino-ethanephosphonous acid.

12. An agent according to claim 1 containing as active ingredient 1-(L-alanyl-L-alanylamino)-ethanephosphonous acid.

13. A method for influencing plant growth, comprising applying to the plants at least one compound of the formula I as defined in claim 1.

14. A method as claimed in claim 9 wherein the plant is a monocotyledonous or dicotyledonous plant and the agent is applied by post-emergent treatment of the sown areas or of the plants.

15. A method as claimed in claim 9, wherein the plant is a grass, cereal crop, tobacco, soya or an ornamental plant.

16. A method as claimed in claim 9 wherein the amount applied of the compound of formula I is between 0.1 and 5 kg of active compound per hectare,for the treatment of existing crops.

17. A method as claimed in claim 9 wherein the amount applied of the compound of formula I is up to 4 kg of active compound, per hectare.

18. A method as claimed in claim 9 wherein a herbicide of the diphenyl ether, phenylurea or triazine series is also used on cereal crops, maize, sugar cane, fruit or in viticulture.